(19) **Europäisches Patentamt European Patent Office Office européen des brevets**

(11) **EP 4 629 196 A1**

(12) # EUROPEAN PATENT APPLICATION

(43) Date of publication:
**08.10.2025 Bulletin 2025/41**

(51) International Patent Classification (IPC):
*G06V 20/69* (2022.01)

(21) Application number: **24168806.8**

(52) Cooperative Patent Classification (CPC):
**G06V 20/698**

(22) Date of filing: **05.04.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Universität Zürich**
**8006 Zürich (CH)**

(72) Inventors:
• **GREBER, Urs Franz**
  **8708 Mänedorf (CH)**

• **MURER, Luca Philipp**
  **8005 Zürich (CH)**
• **VOLLE, Romain René Joseph**
  **8005 Zürich (CH)**
• **PETKIDIS, Anthony Andreas**
  **8050 Zürich (CH)**
• **ANDRIASYAN, Vardan**
  **8050 Zürich (CH)**

(74) Representative: **Braunpat AG**
**Peter Merian-Strasse 28**
**4052 Basel (CH)**

(54) **METHOD FOR LABELLING AN IMAGE OF A PLURALITY OF CELLS AS HAVING OR NOT HAVING VIRUS-INDUCED CYTOPATHIC EFFECT**

(57)     The present invention relates to a computer-implemented method (100) for training a machine learning model to label images of a plurality of cells as having or not having virus-induced cytopathic effect, comprising the steps of:

a. Obtaining a training set including a plurality of images of virus-infected cells and uninfected cells, wherein the training set is annotated with labels indicating the presence or absence of virus-induced cytopathic effect for each image, and wherein the training set includes images of at least a set of cells infected by a one virus type and a set of cells infected by a second virus type;

b. Training the machine learning model on the training set to predict whether an image of a plurality of cells contains virus-induced cytopathic effect or not, based on features extracted from the images.

The present invention relates also to a computer-implemented method for labelling an image of a plurality of cells as having or not having virus-induced cytopathic effect

Fig. 1

EP 4 629 196 A1

**Description**

Technical Field

The present invention relates to a computer-implemented method for training a machine learning model to label images of a plurality of cells as having or not having virus-induced cytopathic effect as well to a computer-implemented method for labelling an image of a plurality of cells as having or not having virus-induced cytopathic effect.

State of the art

Viruses affect cells in many different ways, including metabolism, signal transduction, gene expression, intracellular membrane organization, cytoskeletal integrity and overall morphology. Collectively, these changes are known as cytopathic effect (CPE). CPE is a hallmark of acute virus infection, and its detection is key for biological titer determination of inocula, as exemplified by plaque assay or endpoint dilution assays yielding tissue culture infectious dose 50 ($TCID_{50}$) values, for example. In the laboratory, these assays have traditionally been performed using cell stains, for example crystal violet (CV), or nuclear dyes, such as the DNA-intercalating Hoechst compounds. In clinical settings, $TCID_{50}$ assays are not routinely used due to the requirement of manual annotation, the lack of virus specificity and a rather slow readout that can take several days.

Light microscopy is suitable to study infected cells in live mode. It monitors changes in shape, morphology and physiological state of individual cells or population of cells, and is suitable to assess infection variability. In the past decade, automatic interpretation of microscopy images has been increasingly enhanced by deep learning (DL) and convolutional neural networks (CNNs), and enabled numerous applications in cell and infection biology. For instance, transmitted light microscopy combined with DL can predict fluorescent labels or can classify cell state and type. Recent efforts have combined label-free imaging methods with image processing and artificial intelligence (AI) for automated detection of viral CPE in populations of cultured cells.

The goal of the present invention is to propose a method to improve accuracy, automation, and marker-free CPE detection. The procedure is based on light microscopy imaging of living cells and AI and can deliver virus-type specific results.

Summary of the invention

Thus, the object of the present invention is to propose novel methods, with which the above-described drawbacks of the known methods are completely overcome or at least greatly diminished.

According to the present invention, these objectives are achieved in particular through the elements of the independent claims. Further advantageous embodiments follow moreover from the dependent claims and the description.

In particular, the objectives of the present invention are, in a first aspect, achieved by a computer-implemented method for training a machine learning model to label images of a plurality of cells as having or not having virus-induced cytopathic effect, comprising the steps of:

a. Obtaining a training set including a plurality of images of virus-infected cells and uninfected cells, wherein the training set is annotated with labels indicating the presence or absence of virus-induced cytopathic effect for each image, and wherein the training set includes images of at least a set of cells infected by one virus type and of a set of cells infected by a second virus type;

b. Training the machine learning model on the training set to predict whether an image of a plurality of cells contains virus-induced cytopathic effect or not, based on features extracted from the images.

The inventors have found out and could demonstrate that by training a machine learning model to label images of a plurality of cells as having or not having virus-induced cytopathic effect on a training data set comprising images of at least a set of cells infected by one virus type and a set of cells infected by a second virus type, the training is more robust and the trained model gives better results. Furthermore, with the method of the present invention, it is possible to train a model that can be used to detect cytopathic effects in images of cell infected by unknown viruses.

Advantageously, the training method comprises a step c. of validating the performance of the trained machine learning model on a separate validation set including images of cells infected by the same or different virus types as those present in the training set.

Advantageously, the training set comprises images of virus-infected cells and uninfected cells which were incubated at a temperate of at least 42°C. This allows for accelerating the development of the CPE and thus of the overall training method.

In one preferred embodiment of the first aspect of the present invention, the training set includes images of at least two different types of cells. This allows for having a more robust training and to achieve a trained model that can detect cytopathic effects in images of different types of cells.

Advantageously, the cells are stain-free cells of one or more cell cultures. With this, the model is trained on living cells, allowing the detection of cytopathic effects in living cells.

In a further preferred embodiment of the first aspect of the present invention, the images of cells are obtained by light microscopy, advantageously transmission light microscopy, in particular phase contrast microscopy, or by holotomographic microscopy. Furthermore, it is advantageous to have the training set comprising images obtained by at least two different light microscopes. Light microscopy is a non-invasive imaging technique allowing to image and to train the model on living cells. Training the model on images obtained from at least two different types of light microscopes allows for a more robust training and a labelling of images obtained with different types of light microscopes.

In one preferred embodiment of the first aspect of the present invention, the machine learning model is a convolutional neural network, advantageously an EfficientNet neural network, even more advantageously an EfficientNet-BO neural network. EfficientNet-BO is particularly advantageous due to its innovative scaling method, which systematically balances network depth, width, and resolution. This approach significantly enhances the model's efficiency and accuracy, setting it apart from traditional CNN architectures that often scale these dimensions in an arbitrary manner. EfficientNet-BO's scaling technique is grounded in a principled methodology that leverages a compound coefficient to uniformly scale the network dimensions. This results in a more effective allocation of computational resources, enabling the model to achieve higher accuracy without a proportional increase in computational complexity.

Moreover, EfficientNet-BO uses a baseline architecture that is meticulously optimized. This baseline serves as a foundation for the subsequent scaling, ensuring that the initial model is both powerful and efficient. By starting with this optimized baseline, the scaling process is more effective, leading to superior performance across a range of tasks and datasets compared to other CNN architectures. The architecture's ability to maintain efficiency and accuracy, even when scaled up, is a critical advantage in practical applications where computational resources are limited.

In a further preferred embodiment of the present invention, the machine learning model is further trained to label the nature of the infecting virus. Thanks to this additional step, the trained model can determine which virus or at least which virus class causes the cytopathic effects detected. The trained model can thus be part of a diagnosis method and/or device. Advantageously, the training of the method for labelling the nature of the infecting virus is done on manually annotated images or on cell images labelled by the trained model for labelling the cells having or not having cytopathic effect.

In a second aspect, the objectives of the present invention are achieved by a computer-implemented method for labelling an image of a plurality of cells as having or not having virus-induced cytopathic effect, comprising the steps of:

  a. Obtaining an image of a plurality of cells;

  b. Using a machine learning model trained by means of the method according the present invention to predict whether the obtained image contains cells exhibiting virus-induced cytopathic effects or not, based on features extracted from the image;

  c. Labelling the obtained image as having or not having virus-induced cytopathic effect based on the prediction made by the trained machine learning model.

This method allows to efficiently label images as having or not having virus-induced cytopathic effect. As the machine learning model has been trained on a training data set comprising images of at least a set of cells infected by a one virus type and a set of cells infected by a second virus type, the training is more robust and the trained model gives better labelling results. Furthermore, with the method of the present invention, it is possible to detect cytopathic effects in images of cells infected by unknown viruses.

Advantageously, the images are obtained from cells which were incubated at a temperate of at least 42°C. This allows for accelerating the development of the CPE and thus of the overall labelling method.

In a first preferred embodiment of the second aspect of the present invention, the method further comprises a step of labelling the nature of the infecting virus. Thanks to this additional step, the method can be used to determine which virus or at least which virus class causes the cytopathic effects detected. The method can thus be part of a diagnosis method and/or device.

In a third aspect, the objectives of the present invention are achieved by a computer-implemented method for determining the infectious dose of a virus by means of the method of the present invention for labelling an image of a plurality of cells as having or not having virus-induced cytopathic effect, and comprising the steps of:

  a. Obtaining a plurality of images of cells, wherein the images of a plurality of cells are obtained from a series of dilutions of at least one virus and wherein each image has a dilution identification label;

b. determining the percentage of cells exhibiting virus-induced cytopathic effect in the images labelled as having virus-induced cytopathic effects;

c. calculating the tissue culture infective dose ($TCID_{50}$) based on the percentage of cells exhibiting a cytopathic effect using advantageously the Reed-Muench method or a statistically equivalent method and the dilution identification label.

Thanks to this method, it is possible to determine the $TCID_{50}$ of a virus completely automatically. The detection and labelling of cells exhibiting cytopathic effect is performed by the labelling method of the present invention. Once the images have been correctly labelled, it is possible to use well-known statistical methods to calculate the $TCID_{50}$. As the trained model has been trained on a dataset comprising at least two different types of viruses, the method for determining the $TCID_{50}$ is "virus-agnostic" which represents a big advantage towards known methods.

Advantageously, the images are obtained from cells which were incubated at a temperate of at least 42°C. This allows for accelerating the development of the CPE and thus of the overall method for determining the infectious dose of a virus.

In further aspects, the objectives of the present invention are achieved by a computer program product comprising instructions which, when the program is executed by a computer, cause the computer to carry out the methods of the present invention, by a device or system comprising means for carrying out the methods according to the present invention and by a computer-readable storage medium comprising instructions which, when executed by a computer, cause the computer to carry out the methods according the present invention.

Short description of the drawings

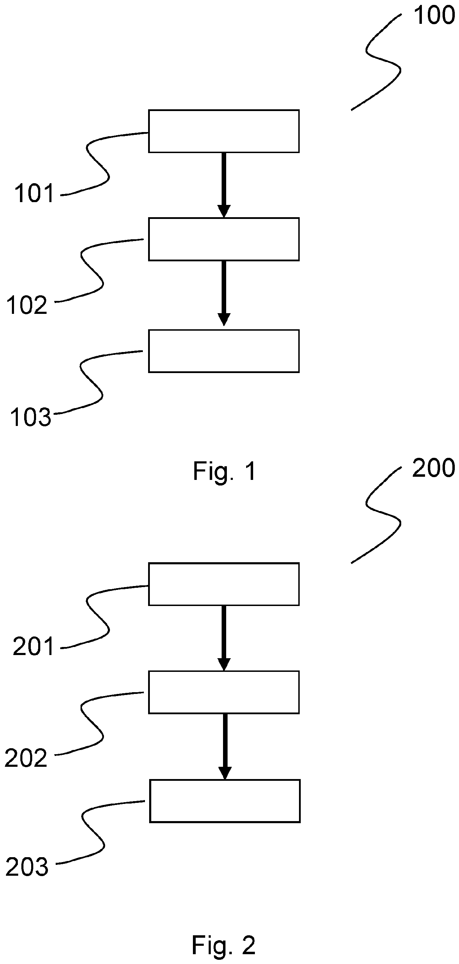

Figure 1 shows a workflow diagram of a computer-implemented method for training a machine learning model to label images of a plurality of cells as having or not having virus-induced cytopathic effect;

Figure 2 shows a workflow diagram of a computer-implemented method for labelling an image of a plurality of cells as having or not having virus-induced cytopathic effect;

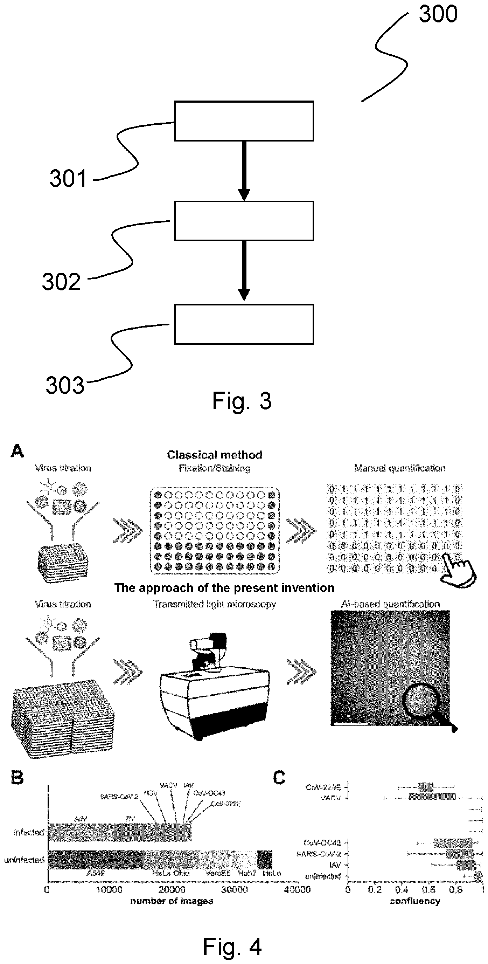

Figure 3 shows a workflow diagram of a computer-implemented method for determining the infectious dose of a virus;

Figure 4 shows a workflow for automated readout of viral infection and dataset composition. (A) Classical method (top) for infection readout employs crystal violet staining followed by manual annotation of virally induced lesions in a cell monolayer. The method of the present invention (bottom) uses automated image acquisition and AI-based detection of virus-induced cytopathic effect. The magnifying glass indicates areas of network attention. Scale bar 1 mm. (B) Composition of acquired dataset, indicating the proportions of viruses in the images of infected wells, and cell lines for uninfected wells. (C) Quantification of cell confluency for different viruses and for uninfected images;

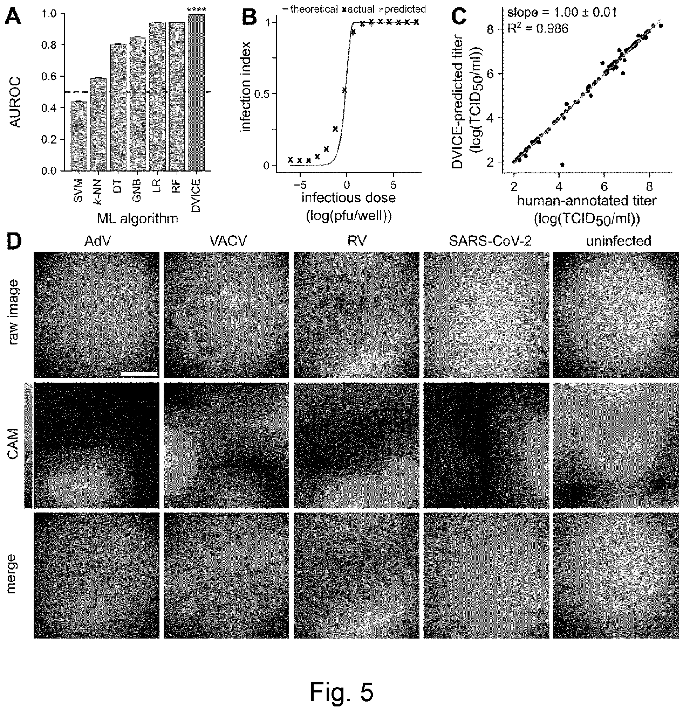

Figure 5 illustrates the network performance and characteristics. (A) Area under the receiver operating characteristic curve (AUROC) for different machine learning algorithms, including support-vector machine (SVM), k-nearest neighbours (k-NN), Gaussian naive Bayes (GNB), decision tree (DT), logistic regression (LR), random forest (RF), and the method of the present invention. (B) Dependency of infection index on virus concentration. The concentration of plaque forming units (pfu) was obtained from the plate annotation and well position. (C) Comparison of humanly annotated (actual) and predicted $TCID_{50}$ values with linear regression line. (D) Example images of different viruses and class activation maps (CAMs), indicating regions of network attention for recognition of virus infection. Scale bar 1 mm;

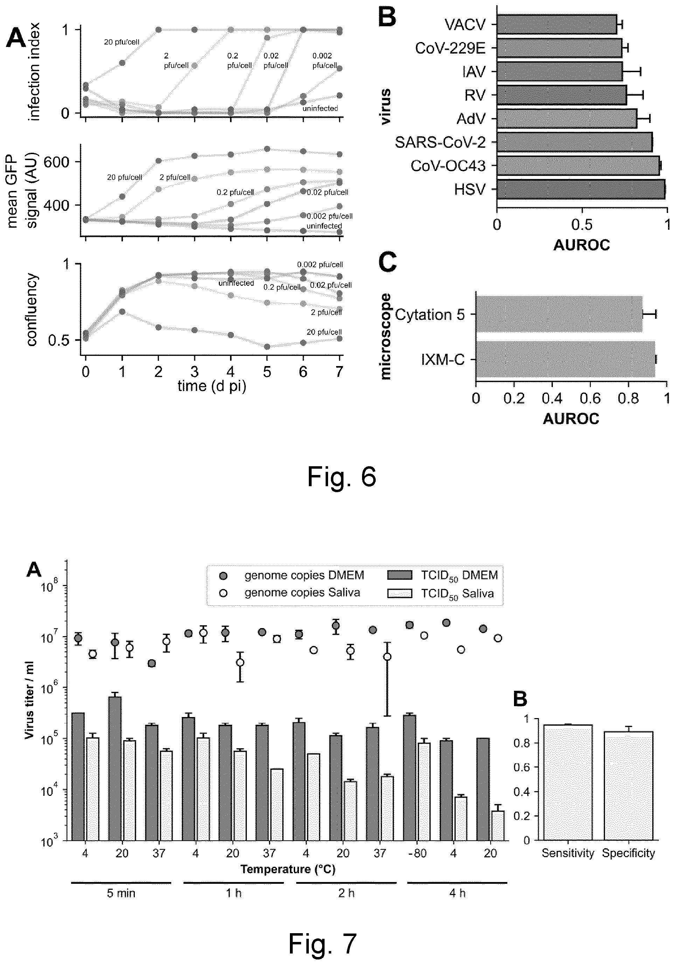

Figure 6 illustrates the capabilities of the method of the present invention under new experimental settings. (A) Time-resolved analysis of A549 cells infected with adenovirus (AdV) AdV-C5-IX-2A-GFP with quantification of predicted infection index by the method developed here , GFP intensity, and cell confluency. pfu = plaque forming units. AUROC = area under the receiver operating characteristic curve. (B) Leave-one-out cross-validation of the present method. (C) Comparison of the present method performance between two microscopes, including ImageXpress Micro Confocal (IXM-C, Molecular Devices) and Cytation 5 (Agilent). n = 480 (216 infected and 264 uninfected images);

Figure shows that the method developed here measures the decay of SARS-CoV-2 infectivity in human saliva as a function of temperature and time of incubation. (A) Saliva and DMEM was spiked with SARS-CoV-2 and incubated at the indicated temperature and for the specified duration. The SARS-CoV-2 concentration after incubation was quantified by $TCID_{50}$ titration for infectious particles using the Reed-Muench method (bars) and by RT-qPCR for virus genome copies (dots). Plot shows means $\pm$ standard deviations, n = 2. (B) Sensitivity and specificity values for the method of the present invention. Sensitivity (true positive rate) is defined as TP/(TP+FN), and specificity (true negative rate) as TN/(TN+FP), where TP = true positive, FN = false negative, TN = true negative, FP = false positive. Data includes 3646 images, of which 627 were infected. Plot shows means $\pm$ standard deviations, n = 3;

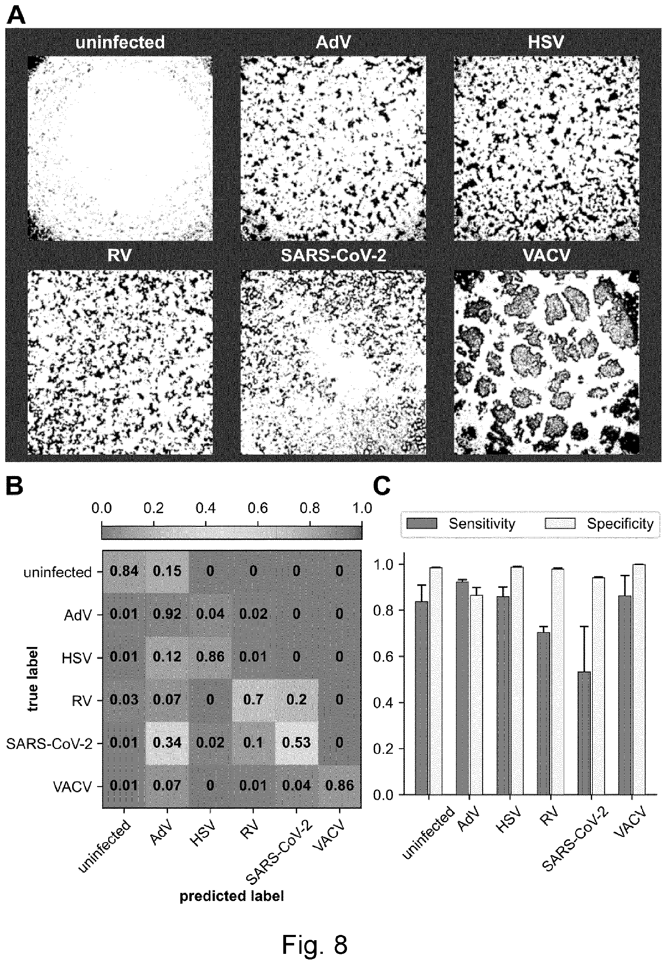

Figure 8 illustrates the virus class-specific identification using the method of the present invention. (A) Example images of the segmentation maps used for virus class-specific identification. (B) Confusion matrix, indicating fractions of correct (across the diagonal) and incorrect classifications. Values are normalized to add up to 1 in each row except for cases of rounding errors. (C) Sensitivity (true positive rate) and specificity (true negative rate) of virus class detection by the present method. Sensitivity was calculated as TP/(TP+FN) and specificity as TN/(TN+FP) TP = true positive, FN = false negative, TN = true negative, FP = false positive. n = 3;

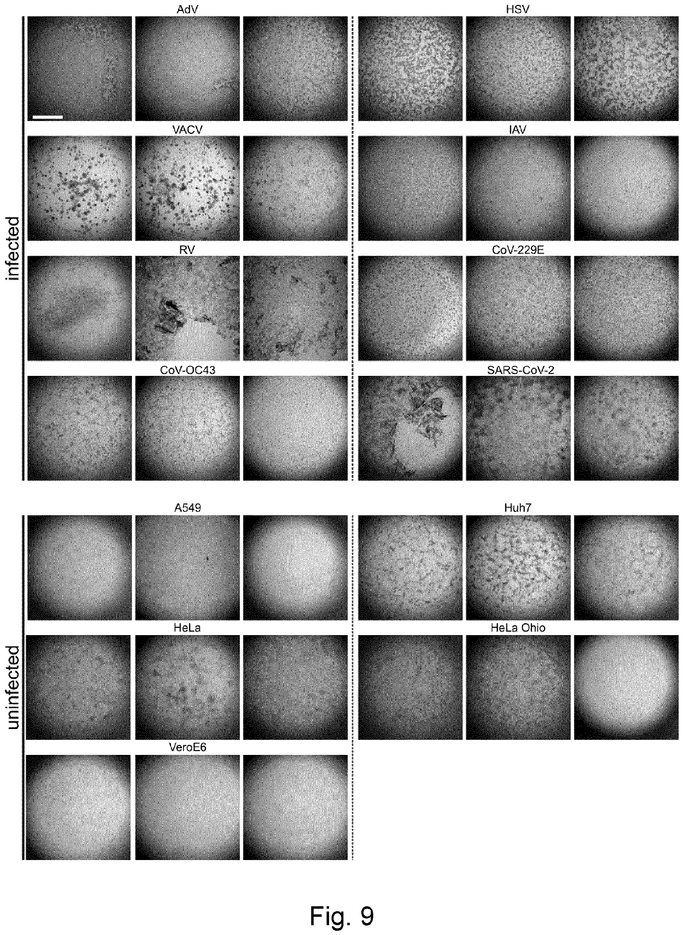

Figure 9 shows example images of infected and uninfected samples from the dataset. Scale bar = 1 mm;

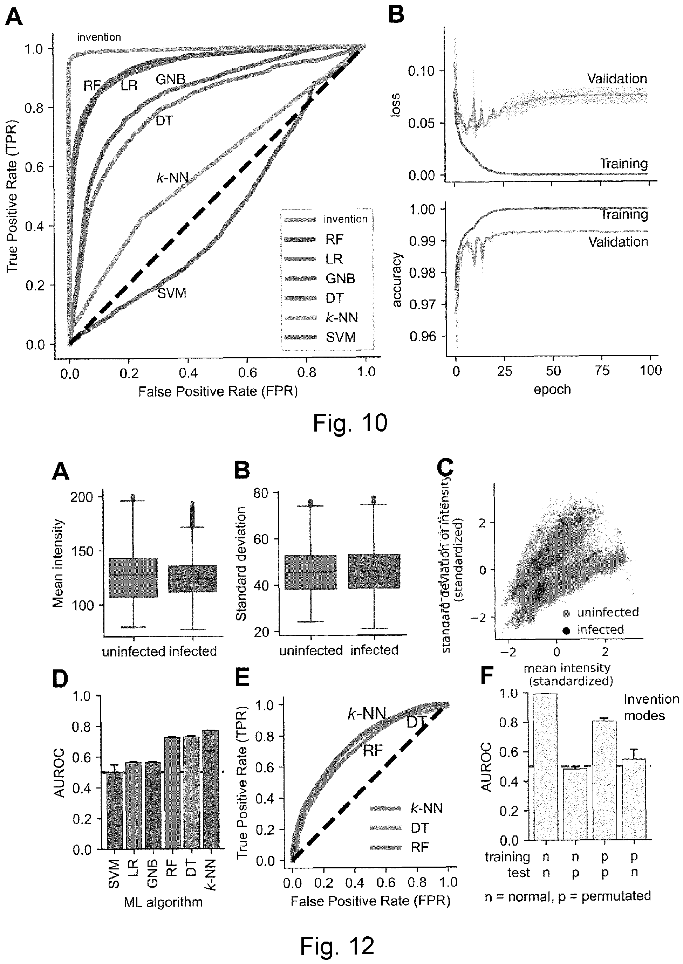

Figure 10 shows the performance characteristics of ML models and training behaviour of the present invention. (A) Receiver operating characteristic (ROC) curves of ML models from Figure 5A. SVM = Support Vector Machine, LR = Logistic Regression classifier, GNB = Gaussian Naïve Bayes, RF = Random Forest classifier, DT = decision tree classifier, k-NN = k-nearest neighbours. The dotted line indicates a random classifier. (B) Graphs show binary cross entropy loss and accuracy of the model of the present invention on training and validation dataset. Shaded regions indicate standard deviation, n = 3;

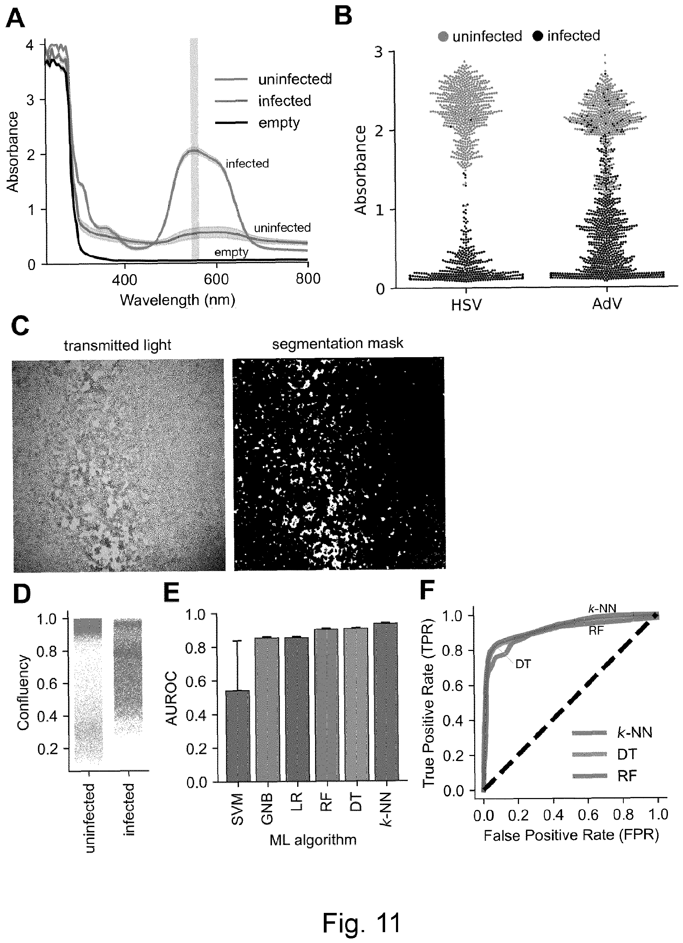

Figure 11 illustrates the results of confluency-based image classification. (A) Absorption spectrum of wells stained with crystal violet. The shaded band around the absorption maximum at 555 $\pm$ 4.5 nm was used for subsequent absorbance measurements. Shaded regions around the curves indicate standard deviations, n = 10. (B) Absorbance values of A549 cells infected with herpes simplex virus type 1 (HSV) or AdV. (C) Example image for cell segmentation quantification from Figure 4C, showing A549 cells infected with AdV. Confluent regions are shown in black in the segmentation mask,. (D) Strip plot of all confluency values from the dataset used for subsequent image classification. (E) AUROC values for different machine learning procedures. SVM = Support Vector Machine, GNB = Gaussian Naïve Bayes, LR = Logistic Regression classifier, RF = Random Forest classifier, DT = decision tree classifier, k-NN = k-nearest neighbours. AUROC = area under the receiver operating characteristic curve. (F) Receiver operating characteristic (ROC) curves for the three best-performing models. The dotted lines in (E) and (F) indicate a random classifier;

Figure 12 illustrates the results of intensity-based image classification. (A) Mean intensity of images used in the study. (B) Standard deviations of image intensities of images used in the study. (C) Standardized mean intensity and standard deviation of intensities. Each dot represents one image. (D) Data were split into 90 % training data and 10 % test data in a random, stratified way and machine learning models were trained to classify images into infected or uninfected based on the image intensity and standard deviation provided in C. Data for model training were prepared using a fivefold, stratified shuffle split and optimal model parameters were determined using a grid search. SVM = Support Vector Machine, LR = Logistic Regression classifier, GNB = Gaussian Naïve Bayes, RF = Random Forest classifier, DT = decision tree classifier, k-NN = k-nearest neighbours. AUROC = area under the receiver operating characteristic curve. (E) Receiver operating characteristic (ROC) curves for the three best-performing models. The dotted line in (D) and (E) indicates a random classifier. (F) The models of the present invention were trained on either normal (n) or randomly permutated (p) images. Model evaluation was performed on a withheld test set which also consisted of normal or permutated images; and

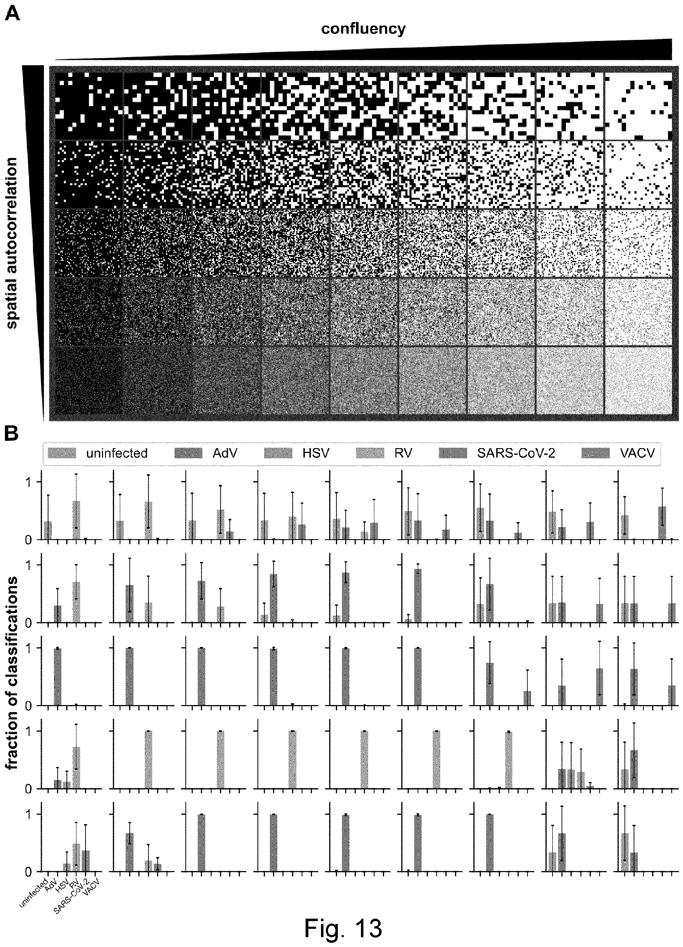

Figure 13 shows synthetic dataset to probe for the network output of the present invention across a range of conditions. (A) Example images from simulated dataset with varying confluency and spatial autocorrelation. For each category, one thousand images were generated. (B) Virus class predictions for simulated dataset. Subpanels refer to the example images shown in panel A. n = 3.

Preferred embodiments

Figure 1 shows a workflow diagram of a computer-implemented method 100 for training a machine learning model to label images of a plurality of cells as having or not having virus-induced cytopathic effect. In a first step 101, a training set including a plurality of images of virus-infected cells and uninfected cells is obtained or acquired. The training set is annotated with labels indicating the presence or absence of virus-induced cytopathic effect for each image. Furthermore, the training set includes images of at least a set of cells infected by a one virus type and a set of cells infected by a second virus type. The virus types can for instance be AdV, HSV, RV, IAV, VACV or CoV (229E, OC43, SARS-CoV-2).

In step 102, the machine learning model is trained on the training set to predict whether an image of a plurality of cells contains virus-induced cytopathic effect or not, based on features extracted from the images.

The embodiment of Figure 1 comprises a third step (103) of the training the machine learning model to label the nature of the infecting virus.

Figure 2 shows a workflow diagram of a computer-implemented method 200 for labelling an image of a plurality of cells as having or not having virus-induced cytopathic effect. In a first step 201, an image of a plurality of cells is obtained or acquired and in step 202, the machine learning model trained according to Figure 1 is used to predict whether the obtained image contains cells exhibiting virus-induced cytopathic effects or not, based on features extracted from the image. Finally in step 203, the obtained image is labelled as having or not having virus-induced cytopathic effect based on the prediction made by the trained machine learning model.

Figure 3 shows a workflow diagram of a computer-implemented method 300 for determining the infectious dose of a virus. In a first step 301, a plurality of images of cells is obtained, wherein the images of a plurality of cells are obtained from a series of dilutions of at least one virus and wherein each image has a dilution identification label. In step 302, the percentage of cells exhibiting virus-induced cytopathic effect in the images labelled as having virus-induced cytopathic effect is determined. And in step 303, the tissue culture infective dose ($TCID_{50}$) is calculated based on the percentage of cells exhibiting a cytopathic effect using advantageously the Reed-Muench method or a statistically equivalent method and the dilution identification label.

Experimental Method, Results and Examples

To establish a workflow for automated scoring of virus infections, the inventors performed a serial dilution infection protocol, and annotated infection phenotypes by transmission light (TL) microscopy and crystal violet (CV) staining to obtain ground truth data. The training of the AI-model was done in the next step, and the results were compared afterwards (Figure 4A).

Ten thousand permissive cancer cells were seeded into 96-well plates, followed by inoculation with either human adenovirus species C type 5 (AdV-C5), herpes simplex virus type 1 (short HSV), influenza A virus (IAV), rhinovirus type A16 (short RV), vaccinia virus-WR (short VACV), coronavirus (CoV)-229E, CoV-OC43, or several isolates of severe acute respiratory syndrome CoV-2 (short SARS-CoV-2), and incubated cells for seven days to allow for manifestation of CPE.

TL images were acquired using a high-throughput microscope ImageXpress Micro Confocal (IXM-C, Molecular Devices) with a 4x magnification objective and a plate loading robot. One central site was imaged for each well, covering approximately one third of the well. Example images are provided in Figure 9. Cells were then fixed with 4 % paraformaldehyde (PFA) for 30 min, and stained with 0.25 % CV. The infection of the stained samples was independently annotated by three human experts. Infection-annotated images were then used to train a CNN based on the EfficientNet-BO architecture for infection state classification. The number of images used from the different viruses comprised a total of 58,619 images, of which 22,873 images (39 %) were from infected, and 35,746 images (61 %) from uninfected wells (Figure 4B). The dataset comprised five different cell lines, human lung epithelial A549 cells for infection with AdV-C5, HSV, IAV, VACV, human cervical cancer HeLa-ATCC cells for VACV, HeLa-Ohio cells for RV, human hepatoma Huh7 cells for CoV-229E and CoV-OC43, and African green monkey VeroE6 cells for SARS-CoV-2. Example images are provided in Figure 9A. To enhance the infection readout of SARS-CoV-2, the inventors used three transgenic cell lines expressing the angiotensin-converting enzyme 2 (ACE2) or the transmembrane protease (TMPRSS2), namely A549-ACE227, Huh7-ACE227, and VeroE6-TMPRSS228. The inventors also acquired a total of 3840 images from uninfected sparsely seeded A549, HeLa-ATCC, HeLa-Ohio, and Huh7 cells, 960 images from each cell line.

As previous work demonstrated that cell confluency can be a surrogate for the infection state, the inventors next quantified the cell confluency in their dataset (Figure 4C, Figure 10). As expected, the median confluency was highest for uninfected wells. Yet, it showed a high inter- and intra-class variability for the different conditions. Intraclass variability may arise from the range of viral concentrations used in the serial dilution assays, and interclass variability can be due to virus-specific manifestation of CPE.

The inventors used human expert annotation of the CV-stained plates as ground truth for infection state, and thereupon trained a lightweight CNN based on the EfficientNet-BO architecture to classify the TL images of infected and uninfected wells. For network training, images were downscaled to a size of 224 x 224 pixels using bicubic interpolation. The inventors trained the model for classification of infected images and compared its performance to several conventional machine learning (ML) algorithms, including support-vector machine (SVM), k-nearest neighbours (k-NN), Gaussian naive Bayes (GNB), decision tree (DT) classifier, logistic regression (LR), and random forest (RF) classifier. The trained model based on EfficientNet-BO achieved an area under the receiver operating characteristic curve (AUROC) of $0.991 \pm 0.001$, surpassing other ML methods (Figure 5A, Figure 10A). Conventional ML methods were trained on histograms of oriented gradients (HOG), which demonstrated superior performance compared to confluency- or intensity-based input features (Figures 11 and 12).

Next, the inventors assessed the suitability of their trained model for application in the readout of $TCID_{50}$ plates. Entire virus titration plates were withheld from the training and validation set, and the trained model was used for infection state classification and subsequent $TCID_{50}$ calculation using the specific infection (SIN) method[1]. Compared with human annotation, the trained model achieved a squared Pearson correlation coefficient of $R^2 = 0.986$ (slope $1.00 \pm 0.01$, n = 130, p = $10^{-120}$), indicating excellent agreement between actual and predicted labels (Figure 5B, 5C). To determine whether trained model learned robust features for infection scoring, the inventors used a procedure known as class activation mapping (CAM)[2] to visualize important regions for infection detection (Figure 5D). This procedure harnesses the global average pooling (GAP) layer of the EfficientNet-BO architecture, which yields a spatial feature map. This feature map can be upscaled and overlaid with the originally acquired image (Figure 5D). In images with confined regions of CPE, the network attention was typically focused on regions with virus-induced lesions. Interestingly, localization was still preserved despite the heavy image resizing to approximately 1 % of the original pixel count. The trained model had a tendency towards disregarding the dark image corners and had a flat attention map for uninfected wells. These CAM analyses show that the trained model recognizes robust features associated with CPE, and thereby enables reliable infection detection.

As the here proposed framework does not require chemical fixation of the sample and is compatible with live-cell imaging, the trained model can be used for real-time monitoring of virus infections. In order to demonstrate this, ten thousand A549 cells were seeded in each well of a 96-well plate overnight and infected with AdV-C5-IX-FS2A-GFP, which expresses GFP under control of the promoter of the late viral protein IX. TL and GFP fluorescence images were acquired each day until day 7 post infection (pi) (Figure 6A). Virus concentration affected both onset and magnitude of GFP expression. The onset of GFP expression generally preceded CPE detected by the trained model, suggesting that the trained model scores features late in infection, but not early ones when cells are still fully attached and do not show lesions in the CV staining. Importantly, the trained model did not score sparse cells as infected, despite a correlation between infection state and confluency in the training dataset (see Figure 4C). The inventors attribute this to the presence of images of sparsely seeded cells in their dataset, enabling the trained model to learn that low cell confluency is not a defining hallmark of viral infection state. In summary, the trained model can be used to monitor the progression of infection in live cells and without interference.

A frequent limitation in applications of neural networks is a lack of generalization beyond the conditions of training. To address this issue, the inventors performed leave-one-out cross-validations, where the inventors trained and validated the model on all images including uninfected samples, while withholding images from a given virus. The performance of the network was then assessed on the withheld images. Results showed high AUROC values >0.7 up to near 1 (Figure 6B), demonstrating that the performance variability for the different viruses could be attributed to the nature of the CPE or the number of images in the particular training dataset. Notably, however, the overall high AUROC values in the leave-one-out cross-validation indicate good generalization, which favours the trained model's application to new settings. Accordingly, the CV staining for HSV showed a better spatial separation between infected and uninfected wells compared to AdV (Figure 9C and 9D). These results suggest that a fast replicating virus, such as HSV, gives rise to distinct CPE compared to a somewhat slower replicating virus, such as AdV species C, such as C2 or C5.

To further assess the versatility of the trained model, TL images from infected cells were acquired with two different microscopes, the IXM-C (Molecular Devices), which was used to record the training dataset, and the Cytation 5 microscope (Agilent). Ten thousand A549 cells were seeded per well in 96-well plates, and infected with serial dilutions of AdV, HSV, or VACV, or were left uninfected. At 7 d pi, the trained model achieved an AUROC of $0.873 \pm 0.071$ for images acquired at the Cytation 5 microscope, compared to $0.941 \pm 0.004$ for the IXM-C (Figure 6C). The predictions of trained model for images acquired at the IXM-C and the Cytation 5 were in excellent agreement, as reflected in a value of 0.92 for Krippendorff's alpha[3].

As the trained model successfully scored viral infectivity, the inventors tested the possibility that their workflow could detect viral infectivity in clinical samples. The inventors spiked samples of human saliva from a PCR-negative donor with a laboratory SARS-CoV-2 BA.1 variant stock reaching a virus titer corresponding to genome equivalents seen in hospitalized COVID-19 patients. Samples were diluted with DMEM, passed through a 0.22 $\mu$m filter to remove cellular debris as well as bacteria, and then incubated at different temperatures for different periods of time, followed by biological titer determination in $TCID_{50}$ assays (Figure 7A). The presence of saliva reduced the viral titer in a time- and temperature-dependent manner compared to virus in DMEM only, but infectious titer was readily detectable in all conditions, providing proof-of-concept for investigation of clinical specimens. Human annotation of infection was compared to the results of the trained model for a total of 3646 images (including 627 infected images) of A549-ACE2, Huh7-ACE2, or VeroE6-TMPRSS2 cells inoculated with serial dilutions of saliva spiked with SARS-CoV-2 BA.1, where the trained model achieved an AUROC of $0.918 \pm 0.020$. The trained model showed a sensitivity (true positive rate) of $0.946 \pm 0.006$ and specificity (true negative rate) of $0.890 \pm 0.044$ (Figure 7B). These data demonstrate that the trained model provides reliable results with human samples, and can be considered for virus titer determination in clinical context, for example antiviral drug efficacy studies or infectivity assessment of hospitalized individuals or outpatients.

The inventors next showed that the trained model also be extended to detect the particular nature of the infecting virus. As not all cell lines in their study are susceptible to infection with all viruses, the cell line information could provide cues about the infecting virus. To mitigate any cell line-specific information and incentivize the AI model to learn the virus-specific infection signature, the inventors trained the model on the previously generated segmentation maps of the images. More precisely, the inventors first trained a decision tree-based binary pixel classifier to generate semantic segmentation maps from sparse annotations. Next, using the predicted segmentation maps, they trained the model of the present invention for virus class-specific classification. Example images of the segmentation maps are provided in Figure 8A. The EfficientNet-BO network was trained with the same procedure as described above, using a dense layer with six output classes (uninfected, AdV-C5, HSV, RV, SARS-CoV-2, VACV) and categorical instead of binary cross entropy loss. Overall, the trained model achieved an accuracy of $0.799 \pm 0.025$, an F1 score (harmonic mean of sensitivity and specificity) of $0.802 \pm 0.026$, and a Matthews Correlation Coefficient of $0.757 \pm 0.029$. Evaluation of the confusion matrix indicates that DVICE successfully recognized the different classes with high sensitivity for all viruses (Figure 8C).

To explore which image properties could facilitate class-specific recognition, the inventors generated a synthetic dataset to probe for the network output across a range of conditions (Figure 13). The combination of high confluency and spatial autocorrelation was associated with increased rates of detection of the classes uninfected, SARS-CoV-2, and VACV, while images with low confluency and spatial autocorrelation were associated with AdV and RV. This could reflect the biological phenotype of the viruses, as VACV and SARS-CoV-2 infections lead to formation of syncytia resulting in clusters of cells.

Experimental Details

Cell lines were cultivated in a T75 flask in Dulbecco's Modified Eagle Medium (DMEM, D6429; Sigma-Aldrich, St. Louis, USA) supplemented with 10 % fetal bovine serum (FBS, 10270-106; Gibco, Carlsbad, USA) and non-essential amino acids (M7145; Sigma-Aldrich, St. Louis, USA). Cells were incubated in an environment of 37 °C, 5 % CO2 and 95 % humidity. Cultures of VeroE6-TMPRSS2 were supplemented with 1 mg/mL geneticin (G418-RO, Merck) and cultures of A549-ACE2 and Huh7-ACE2 with 10 $\mu$g/mL blasticidin (ant-bl-1, InvivoGen) to preserve expression of the transgenes. All cultures were passaged twice per week by washing with PBS and trypsinization (C-41020; Trypsin-EDTA, Sigma-Aldrich, St. Louis, USA).

TL images were acquired at 7 d pi using the high-throughput microscope ImageXpress Micro Confocal (IXM-C, Molecular Devices) with a 4x air objective. Images had a resolution of 2048 x 2048 pixels and a depth of 16 bit. Fluorescence microscopy images were likewise acquired at the IXM-C. Images acquired at the Cytation 5 (Agilent) had a resolution of 1992 x 1992 pixels and a depth of 16 bit. Cells were imaged in a BSL-2 environment without fixation. Cells infected with SARS-CoV-2 were fixed by addition of paraformaldehyde to a final concentration of 4 %. Plates were decontaminated and transferred to a BSL-2 laboratory for image acquisition.

For infection experiments, T75 flasks of 90 % confluent cell cultures were trypsinated and cells were re-suspended in 10 ml DMEM. Cells were diluted to a concentration of 100,000 cells per ml. 10,000 cells were seeded in 100 $\mu$l medium overnight. For sparsely seeded wells, 1000 cells were seeded in 100 $\mu$l, and images were acquired the next day. Infection experiments were performed in a biosafety level (BSL)-2 laboratory, except for experiments with SARS-CoV-2, which were performed in a BSL-3 laboratory. 8 different virus concentrations were prepared by serial dilutions, and cells were infected by addition of 20 $\mu$l inoculum with 10 replicates per condition per plate. The first and last column of each plate were left uninfected and supplemented by 20 $\mu$l fresh medium. After image acquisition, cells were fixed by adding 30 $\mu$l of a 16 % paraformaldehyde (PFA) solution for 30 minutes, except for SARS-CoV-2, where fixation was performed prior to acquisition. PFA was then discarded and 50 $\mu$l of a 0.25 % crystal violet (CV) staining solution prepared in an aqueous solution with 10 % methanol were added for one hour. The CV staining solution was discarded, and cells were washed by submerging the plate in water, after which the plates were left to dry. The infection phenotype was independently assessed by three human experts, and image annotations were obtained by majority vote.

Saliva samples were collected from healthy, adult individuals. Saliva specimens (250 $\mu$l) were spiked with 50 $\mu$l of SARS-CoV-2 BA.1 variant. Spiked salivas were then diluted in DMEM medium at a final volume of 1 ml and filtered with a 0.22 $\mu$m Millex-GV Filter (Mercks) to eliminate bacteria. As control, 50 $\mu$l of SARS-CoV-2 BA.1 were spiked in 950 $\mu$l DMEM medium and filtered similarly. SARS-CoV-2 spiked suspensions were then incubated at -80°C, 20°C, and 4°C for 24 h; at 37°C, 20°C, and 4°C for 2 h, 1 h, or 5 min. Each time point and temperature was tested with two independent biological replicates of spiked saliva and DMEM control. At the end of the incubation time, the respective virus suspensions were serially diluted in tenfold steps and inoculated on VeroE6-TMPRSS2 cells for virus $TCID_{50}$ titration. In parallel, 50 $\mu$l of the respective incubated virus suspensions were mixed with 150 $\mu$l of TRIzol reagent (Thermo Fisher) and subjected to RNA extraction with Direct-zol RNA Miniprep kit (Zymo Research) according to the manufacturer's protocol. Extracted SARS-CoV-2 RNA was then quantified by RT-qPCR according to a previously described method. The procedures involving human saliva were approved by the ethical board of the Kanton Zurich, Switzerland (BASEC number Req-2022-01020).

To quantify the absorbance of 96-well plates stained with crystal violet, a spectral scan of fully confluent wells was performed at a Tecan plate reader. Subsequent measurements of absorbance were performed at the spectral range with the highest absorbance, which was at 555 $\pm$ 4.5 nm.

For training the model, the images were rescaled to an 8-bit range using min-max normalization, resized to 224 x 224 pixels using bicubic interpolation, and converted to RGB format. Images were split into training, validation, and test set in a stratified way, while ensuring that the images reserved for the test set came from plates not present in the training or validation set. For infection phenotype classification with the trained model, the tensorflow (version 2.7) implementation of the EfficientNet-BO architecture was used. The model contains seven distinct mobile inverted bottleneck convolution (MBConv) blocks with squeeze-and-excitation (SE) layers as attention mechanism. A custom head was added that comprises a global average pooling (GAP) layer, a dropout layer with a rate of 0.3, and a two-way dense layer for the final classification, or a 6-way dense layer for virus class specific classification. The network has 4 million parameters, which were randomly initialized. The comparatively low number of trainable parameters facilitates training and finetuning. Training was performed with a batch size of 128 on an NVIDIA GeForce RTX 3090. An Adam optimizer was used to minimize a class-weighted binary (or categorical in the case of virus class-specific classification) cross-entropy loss function with an initial learning rate of 0.001 for the first 10 epochs, after which the learning rate decayed by a factor of $e^{-0.1}$ every epoch. Training images were augmented by horizontal and vertical reflections. For the evaluation, the model from the epoch with the lowest loss on the validation set was selected.

For training of additional machine learning (ML) algorithms, histograms of oriented gradients (HOG) were computed using scikit-image, resulting in 2592 features per image. HOG features were standardized, scaled to unit variance, and split to training and test data in a stratified way with threefold cross validation. 90 % of the data were selected for training and 10 % for test purposes. ML algorithms included Gaussian naive Bayes (GNB), logistic regression (LR), k-nearest neighbour (k-NN), random forest (RF), decision tree (DT) classifier, and support vector machine (SVM) in their scikit-learn implementation. Optimal parameters were determined by an initial grid search. SVM did not converge and was stopped after 1000 epochs, when the present state of the model was used for evaluation. Statistical evaluation was performed using one-way analysis of variables (ANOVA) with GraphPad PRISM (version 9.3.1).

Model performance was evaluated using the area under the receiver operating characteristic curve (AUROC). Ensembles of models were trained from different random seeds, which affected data selection and parameter initialization.

For cell density quantification, images were initially converted to 8-bit png images using min-max-normalization and rescaled to 1024 x 1024 pixels using bicubic interpolation. Pixel classification was performed using a decision tree model trained in ilastik to perform semantic segmentation. Confluency was calculated by dividing the number of foreground pixels by the total pixel number. For training of the virus class-specific models, the segmentation maps were downscaled to 224 x 224 pixel images using bicubic interpolation.

$TCID_{50}$ and plaque forming unit (pfu) values were calculated using the specific infection (SIN) method, which provides a probabilistic estimate of a sample's infectivity. The relationship between SIN or pfu values and $TCID_{50}$ values is provided by the Poisson distribution and was calculated as

$$1\ \mathrm{SIN} = 1\ \mathrm{pfu} = \frac{1}{ln(2)}\,TCID_{50} \approx 1.44\ TCID_{50},$$

where ln is the natural logarithm. The theoretical infection index is also provided by the Poisson distribution and was calculated as the probability P of a well receiving at least one infectious particle n and is provided by $P(n \geq 1) = 1 - P(n = 0) = 1 - \exp(-pfu)$, where exp is the natural exponential function. For Figure 7, $TCID_{50}$ values were calculated using the Reed-Muench-method.

Parameters of machine learning models used in grid search:

| Machine learning model | parameter | Value range |
|---|---|---|
| Gaussian Naïve Bayes (GNB) | var_smoothing | numpy.logspace(0, -9, num = 100), equivalent to $\left\{10^{\frac{-9i}{99}}\Big| i = 0, 1, 2, …, 99\right\}$ |
| Random Forrest Classifier (RF) | | |
| Logistic Regression (LR) | solver | ["lbfgs", "saga"] |
| | C | [1, 10] |
| Decision Tree Classifier (DT) | criterion | ["gini", "entropy"] |
| | splitter | ["best", "random"] |
| | max_depth | [5, 15, None] |

(continued)

| Machine learning model | parameter | Value range |
|---|---|---|
| Support Vector Machine (SVM) | kernel | ["linear", "rbf", "poly"] |
| | C | [1, 10] |
| k nearest neighbour (k-NN) | n_neighbours | [3, 5, 10] |

Performance metrics of machine learning models:

Accuracy indicates the fraction of correctly classified images, given by $Accuracy = \frac{TP+TN}{TP+TN+FP+FN}$. The F1 score, also known as Sorensen-Dice TP+TN+FP+FN coefficient, is the harmonic mean of precision and recall, given by

$F1 = \frac{2 \cdot precision \cdot recall}{precision+recall}$, where $precision = \frac{TP}{TP+FP}$ and $recall = \frac{TP}{TP+FN}$. The Matthews correlation coefficient (MCC) reflects the correlation between observed and predicted classes and is given by

$MCC = \frac{TP \cdot TN - FP \cdot FN}{\sqrt{(TP+FP)(TP+FN)(TN+FP)(TN+FN)}}$. The area under the receiver operator characteristic (ROC) curve (AUROC) is the integral of the function. TP = true positive, TN = true negative, FP = false positive, FN = false negative. Data indicate means $\pm$ standard deviation, n = 3

| metric | SVM | k-NN | DT | GNB | LR | RF | Present invention |
|---|---|---|---|---|---|---|---|
| Accuracy | 0.4246 $\pm$ 0.0044 | 0.6301 $\pm$ 0.0033 | 0.7473 $\pm$ 0.0143 | 0.7788 $\pm$ 0.0008 | 0.8848 $\pm$ 0.0018 | 0.8803 $\pm$ 0.0003 | 0.9912 $\pm$ 0.0012 |
| F1 score | 0.4279 $\pm$ 0.0073 | 0.5383 $\pm$ 0.0048 | 0.7386 $\pm$ 0.0126 | 0.7662 $\pm$ 0.0008 | 0.8837 $\pm$ 0.0016 | 0.8736 $\pm$ 0.0002 | 0.9912 $\pm$ 0.0012 |
| AUROC | 0.4353 $\pm$ 0.0056 | 0.5844 $\pm$ 0.0042 | 0.7879 $\pm$ 0.0232 | 0.8489 $\pm$ 0.0016 | 0.9404 $\pm$ 0.0027 | 0.9429 $\pm$ 0.0011 | 0.9914 $\pm$ 0.0012 |
| MCC | -0.1190 $\pm$ 0.0077 | 0.1286 $\pm$ 0.0133 | 0.4522 $\pm$ 0.0307 | 0.5259 $\pm$ 0.0022 | 0.7550 $\pm$ 0.0039 | 0.7455 $\pm$ 0.0008 | 0.9825 $\pm$ 0.0024 |

References

1. Zhou, B., Khosla, A., Lapedriza, A., Oliva, A. & Torralba, A. Learning deep features for discriminative localization. in Proceedings of 2016 IEEE Conference on Computer Vision and Pattern Recognition (CVPR) 2921-2929 (IEEE, 2016). doi:10.1 109/CVPR.2016.319

2. Jetzer, T., Studer, L., Bieri, M., Greber, U. F. & Hemmi, S. Engineered human adenoviruses of species B and C report early, intermediate early and late viral gene expression. Human Gene Ther, doi: 10.1089/hum.2023.121

3. Wyllie, A. L. et al. Saliva or Nasopharyngeal Swab Specimens for Detection of SARS-CoV-2. N. Engl. J. Med. 383, 1283-1286 (2020).

**Claims**

**1.** A computer-implemented method (100) for training a machine learning model to label images of a plurality of cells as having or not having virus-induced cytopathic effect, comprising the steps of:

a. Obtaining a training set including a plurality of images of virus-infected cells and uninfected cells, wherein the training set is annotated with labels indicating the presence or absence of virus-induced cytopathic effect for each image, and wherein the training set includes images of at least a set of cells infected by a one virus type and a set of cells infected by a second virus type;

b. Training the machine learning model on the training set to predict whether an image of a plurality of cells contains virus-induced cytopathic effect or not, based on features extracted from the images.

2. The method according to claim 1 comprising a step c. of validating the performance of the trained machine learning model on a separate validation set including images of cells infected by the same or different virus types as those present in the training set.

3. The method according to any one of claims 1 or 2, wherein the training set includes images of at least two different types of cells.

4. The method according to any one of the preceding claims, wherein the cells are stain-free cells of one or more cell cultures.

5. The method according to any one of the preceding claims, wherein the images of cells are obtained by light microscopy, advantageously transmission light microscopy, in particular phase contrast microscopy, or by holotomographic microscopy.

6. The method according to claim 5, wherein the images of cells are transmitted light microscopy images.

7. The method according to any one of claims 5 or 6, wherein the training set comprises images obtained by at least two different light microscopes.

8. The method according to any one of the preceding claims, wherein the machine learning model is a convolutional neural network, advantageously an EfficientNet neural network, even more advantageously an EfficientNet-BO neural network.

9. The method according to any one of the preceding claims, wherein the machine learning model is further trained to label the nature of the infecting virus.

10. A computer-implemented method for labelling an image of a plurality of cells as having or not having virus-induced cytopathic effect, comprising the steps of:

a. Obtaining an image of a plurality of cells;

b. Using a machine learning model trained by means of the method according to any one of the claims 1 to 9 to predict whether the obtained image contains cells exhibiting virus-induced cytopathic effects or not, based on features extracted from the image;

c. Labelling the obtained image as having or not having virus-induced cytopathic effect based on the prediction made by the trained machine learning model.

11. The method of claim 10 further comprising a step of labelling the nature of the infecting virus.

12. A computer-implemented method for determining the infectious dose of a virus by means of the method of claims 10 or 11, and comprising the steps of:

a. Obtaining a plurality of images of cells, wherein the images of a plurality of cells are obtained from a series of dilutions of at least one virus and wherein each image has a dilution identification label;

b. determining the percentage of cells exhibiting virus-induced cytopathic effect in the images labelled as having virus-induced cytopathic effects;

c. calculating the tissue culture infective dose ($TCID_{50}$) based on the percentage of cells exhibiting a cytopathic effect using advantageously the Reed-Muench method or a statistically equivalent method and the dilution identification label.

13. A computer program product comprising instructions which, when the program is executed by a computer, cause the computer to carry out the method according to any one of the claims 1 to 12.

14. A device or system comprising means for carrying out the method according to any one of the claims 1 to 12.

15. A computer-readable storage medium comprising instructions which, when executed by a computer, cause the computer to carry out the method according to any one of the claims 1 to 12.

Fig. 1

Fig. 2

Fig. 3

Fig. 4

Fig. 5

Fig. 6

Fig. 7

Fig. 8

Fig. 9

Fig. 10

Fig. 12

Fig. 11

Fig. 13

Europäisches
Patentamt

European
Patent Office

Office européen
des brevets

# EUROPEAN SEARCH REPORT

Application Number

EP 24 16 8806

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/212463 A1 (SARTORIUS BIOANALYTICAL INSTR INC [US]) 6 October 2022 (2022-10-06) * the whole document * | 1-15 | INV. G06V20/69 |
| X | Dodkins Rupert ET AL: "A Rapid, High Throughput, Viral Infectivity Assay using Automated Brightfield Microscopy with Machine Learning", bioRxiv, 8 April 2022 (2022-04-08), XP093006406, DOI: 10.1101/2022.03.23.485512 Retrieved from the Internet: URL:https://www.biorxiv.org/content/10.1101/2022.03.23.485512v2 [retrieved on 2022-12-09] * the whole document * | 1-15 | |
| X | US 11 887 302 B2 (AMGEN INC [US]) 30 January 2024 (2024-01-30) * the whole document * | 1-15 | |
| | | | **TECHNICAL FIELDS SEARCHED (IPC)** |
| A | ANDRIASYAN VARDAN ET AL: "Microscopy deep learning predicts virus infections and reveals mechanics of lytic-infected cells", ISCIENCE, vol. 24, no. 6, 25 June 2021 (2021-06-25), page 102543, XP055840035, US ISSN: 2589-0042, DOI: 10.1016/j.isci.2021.102543 * the whole document * | 1-15 | G06V |

-/--

The present search report has been drawn up for all claims

| Place of search | Date of completion of the search | Examiner |
|---|---|---|
| The Hague | 6 September 2024 | de Castro Palomares |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

Europäisches Patentamt

European Patent Office

Office européen des brevets

## EUROPEAN SEARCH REPORT

**Application Number**

EP 24 16 8806

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XU ZIXI ET AL: "Cell State Recognition of Cytopathic Effect with YOLO Detector", JOURNAL OF PHYSICS: CONFERENCE SERIES, INSTITUTE OF PHYSICS PUBLISHING, GB, vol. 2456, no. 1, 1 March 2023 (2023-03-01), XP020447918, ISSN: 1742-6588, DOI: 10.1088/1742-6596/2456/1/012029 [retrieved on 2023-03-01] * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 6 September 2024 | de Castro Palomares |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 8806

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2024

| Patent document cited in search report | | Publication date | Patent family member(s) | | Publication date |
|---|---|---|---|---|---|
| WO 2022212463 | A1 | 06-10-2022 | JP | 2024515512 A | 10-04-2024 |
| | | | KR | 20230163541 A | 30-11-2023 |
| | | | WO | 2022212463 A1 | 06-10-2022 |
| US 11887302 | B2 | 30-01-2024 | DK | 3884463 T3 | 18-03-2024 |
| | | | EP | 3884463 A1 | 29-09-2021 |
| | | | ES | 2973723 T3 | 24-06-2024 |
| | | | FI | 3884463 T3 | 14-03-2024 |
| | | | HU | E065504 T2 | 28-05-2024 |
| | | | LT | 3884463 T | 25-03-2024 |
| | | | PL | 3884463 T3 | 29-04-2024 |
| | | | PT | 3884463 T | 14-03-2024 |
| | | | SI | 3884463 T1 | 31-05-2024 |
| | | | US | 2022028065 A1 | 27-01-2022 |
| | | | WO | 2020112722 A1 | 04-06-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Learning deep features for discriminative localization.. **ZHOU, B.** ; **KHOSLA, A.** ; **LAPEDRIZA, A.** ; **OLIVA, A.** ; **TORRALBA, A.** Proceedings of 2016 IEEE Conference on Computer Vision and Pattern Recognition (CVPR). IEEE, 2016, 2921-2929

- **JETZER, T.** ; **STUDER, L.** ; **BIERI, M.** ; **GREBER, U. F.** ; **HEMMI, S.** Engineered human adenoviruses of species B and C report early, intermediate early and late viral gene expression.. *Human Gene Ther*
- **WYLLIE, A. L. et al.** Saliva or Nasopharyngeal Swab Specimens for Detection of SARS-CoV-2.. *N. Engl. J. Med.*, 2020, vol. 383, 1283-1286